# EUROPEAN PATENT SPECIFICATION

(11) **EP 0 461 299 B1**
(45) Date of publication and mention of the grant of the patent: **03.01.1996**
(21) Application number: 90116040.8
(22) Date of filing: 22.08.1990
(51) Int. Cl.: F16B 13/14, F16B 5/01, F16B 17/00

(54) **Apparatus for seating a fastener insert in a honeycomb panel**
Einrichtung zum Festsetzen eines Befestigungseinsatzes in einer Wabentafel
Appareillage pour fixer un élément insérable de fixation dans un panneau en nid d'abeilles

(30) Priority: 11.06.1990 US 536433
(43) Date of publication of application: 18.12.1991
(73) Proprietor: ATR INTERNATIONAL, INC., Clearwater Florida 33620 (US)
(72) Inventor: Fetterhoff, Donald C., S., St. Petersburg, FL 33712 (US); Do, Hien Dinh, N.,Pinellas Park, FL 34666 (US)
(74) Representative: Tönnies, Jan G., Dipl.-Ing.

(56) References cited:
- DE-A- 2 750 829
- DE-A- 3 042 432
- US-A- 3 282 015
- US-A- 3 621 557
- US-A- 4 800 643

## Description

The invention relates to a mounting fixture for aligning and seating a fastener insert in a honeycomb panel with the features of the preamble of claim 1, as known from DE-A-2 750 829.

In this document, the chimney is formed like a hexagon nut for twisting the mounting fixture by means of a spanner. The use of a spanner does not allow the pulling of the amounting fixture by hand, however.

It is the object of the invention to provide a mounting fixture with the features of the pre-characterized part which allows twisting and pulling of the mounting fixture by hand in one step.

This object is solved by the features of the only claim.

The invention may be best understood by those having ordinary skill in the art by reference to the following detailed description when considered in conjunction with the accompanying drawings in which:

FIG. 1 is a perspective view of the mounting fixture employed in the method and a phantom view of one type of fastener insert.

FIG. 2 is a bottom plan view of the mounting fixture.

FIG. 3 is a cross section of the mounting fixture and a fastener insert in a honeycomb panel.

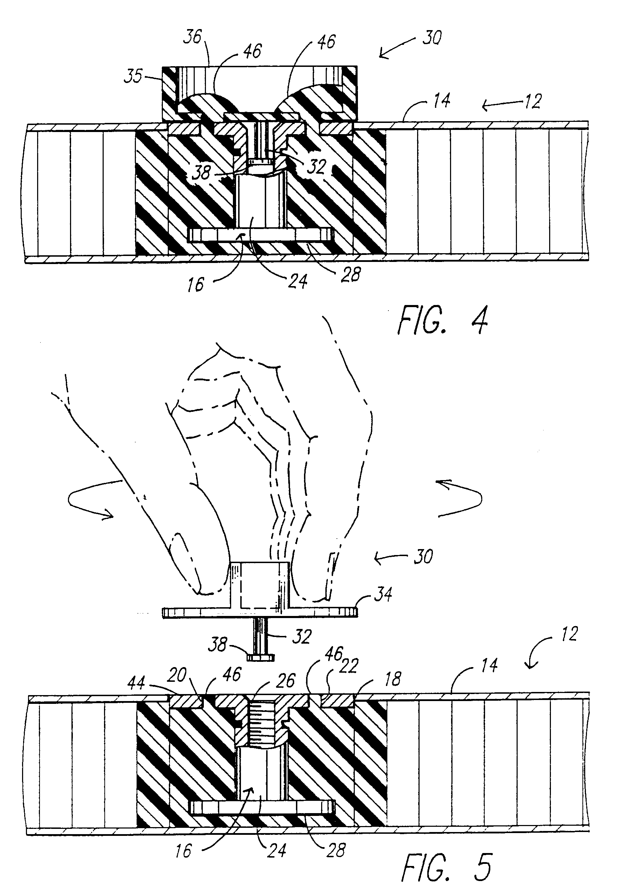

FIG. 4 is a cross section of the mounting fixture engaged with the fastener insert in a honeycomb panel and epoxy filling the voids.

FIG. 5 is a view of the fastener insert and honeycomb panel in cross section showing the location of the epoxy after the mounting fixture is removed by a simple hand twisting and raising motion.

FIG. 6 is a perspective view showing the mounting fixture about to be snapped into another type of fastener insert.

FIG. 7 is a cross section of the honeycomb panel and fastener insert showing the flow of epoxy adhesive prior to setting.

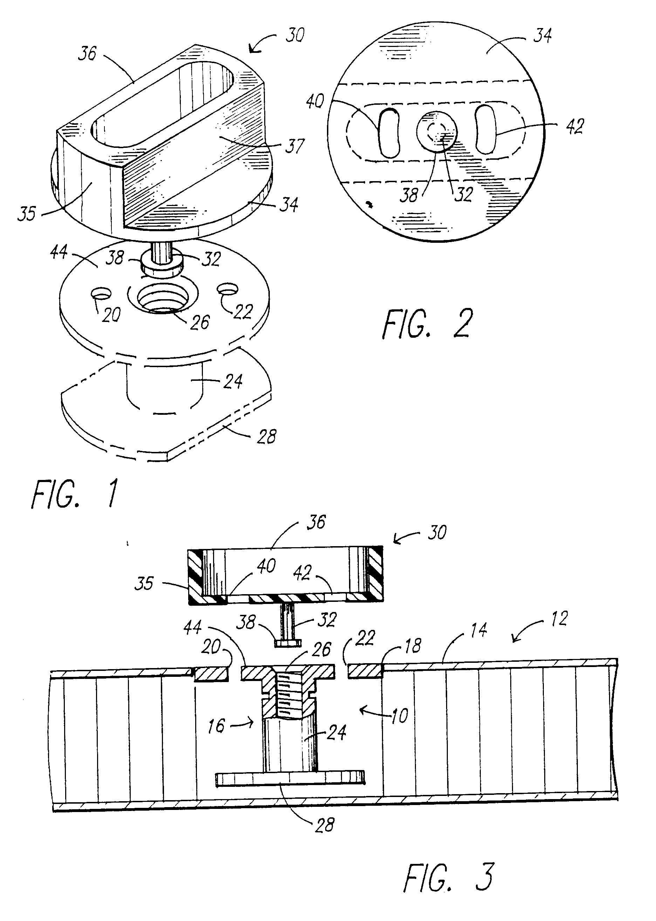

The mounting fixture is used after drilling or punching a hole 10 in a honeycomb panel 12 having an upper skin 14, as seen in FIG. 3. A Fastener insert 16 usually with mounting fixture 30 snapped together is inserted into hole 10, so that fastener head 18 fills the opening to the hole 10, but the through bores 20 and 22 in the head 18 permit entry of adhesive into the hole 10. The insert fastener 16 has a central body 24 which is cylindrical in shape and has an inner bore 26 which is threaded to accept a bolt. A flat base 28 terminates the other end.

A mounting fixture 30 is inserted into the fastener insert by inserting a descending rod portion 32, having a disc shaped element at its end into the bore 26 of the fastener insert 16. The disc 38 snaps into the threads in bore 26. The rod 32 is integral with the base 34 on the mounting fixture 30. The chimney has a pair of opposite upright narrow end walls 35 flush with an edge of the base 34 and a pair of opposite upright long side walls 37 spaced apart from an edge of the base 34. Chimney 36 encloses bores 40 and 42 in base 34. The bores 40 and 42 penetrate the base 34 as seen in FIGS. 2 and 3.

After the mounting fixture 30 is inserted into the fastener insert 16, the base 34 of the mounting fixture 30 rests on the top surface 44 of the fastener insert head 18. Bore 40 is aligned with bore 20 and bore 42 is aligned with bore 22. Base 34 slightly overlaps head 18 of the fastener insert and the hole 10.

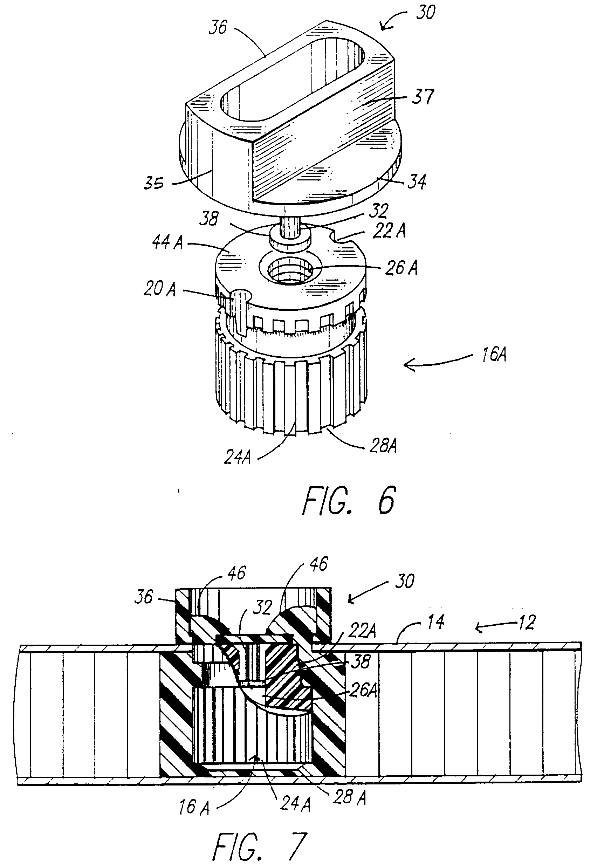

Epoxy 46 or other adhesive is inserted through the chimney to either of bores 40 or 42 and is continuously pumped until the hole 10 is filled with epoxy. Thereafter, assuming epoxy is pumped down through bore 40, the epoxy begins to rise and exits bore 22 and enters the chimney 36 through bore 42. As soon as the operator sees the epoxy 46 entering the chimney 36 through the alternate bore hole the procedure is stopped and the epoxy is allowed to cure. After curing, the mounting fixture is removed by a twisting and pulling motion as seen in FIG. 5. The cured epoxy 46 as seen in FIGS. 5 and 7 fills the hole 10 of the honeycomb panel and securely holds the fastener insert 16 or 16A in the honeycomb panel 12.

Another type of fastener, insert 16A, can be used in this method with the same mounting fixture 30, as seen in FIG. 6. Fastener 16A has a top surface 44A with semi-circular grooves 20A and 22A on opposite edges. The fastener 16A has a central bore 26A with internal threads. The fastener has a cylindrical bottom portion 24A tapering to a bottom surface 28A. The mounting fixture 30 is snapped into the fastener 16A and the joined fastener 16A is then inserted into hole 10 so that the top surface 44A is flush with surface 14 of the honeycomb panel 12. Epoxy is pumped into one of the bores in base 34 and after filling hole 10 exits partially through the other bore in base 34 enclosed by chimney 36. After the epoxy is set, the mounting fixture is removed by a simple twisting and pulling action to break the epoxy joint between the insert and fixture.

Bolts from aircraft auxiliary equipment or other lightweight equipment can be screwed into the fastener insert through bore 26 or 26A and thereby can be securely held in place adjacent the honeycomb panel.

The chimney 36 employed in the mounting fixture 30 captures the overflow epoxy to keep the surface around the mounting fixture clean. In addition, the rod 32 and disc 38 act to prevent epoxy from contaminating the threads in bore 26 of the fastener insert.

## Claims

1. A mounting fixture for aligning and seating a fastener insert (16) in a honeycomb panel (12), the fastener insert (16) having an internal threaded bore (26) and an epoxy access hole (20, 22) on each side of the threaded bore (26) in a top circular plate, and said mounting fixture (30) having a circular planar base plate (34) having a pair of through bores (40, 42), a rod (32) descending from a central portion of the base plate (34) and a chimney (36) ascending from the base plate (34) having an open interior surrounded by side walls (37) for access to the through bores (40, 42),
characterised in that the chimney (36) has a pair of opposite upright narrow end walls (35) flush with an edge of the base (34) and a pair of opposite upright long side walls (37) spaced apart from an edge of the base (34), and
in that the rod (32) is provided distal from the base (34) with a disc (30) for engaging the internal threads of the fastener insert (16).

## Patentansprüche

1. Eine Befestigungseinheit zum Ausrichten und Einsetzen eines Befestigungseinsatzes (16) in eine Wabenplatte (12), wobei der Befestigungseinsatz (16) eine mit einem Innengewinde versehene Bohrung (26) besitzt, und mit einem Epoxidzugangsloch (20, 22) auf jeder Seite der mit einem Gewinde versehenen Bohrung (26) in einer runden Oberplatte versehen ist, und die Befestigungseinheit (30) eine runde ebene Basisplatte (34) besitzt, die ein Paar von Durchlaßlöchern (40, 42) aufweist, sowie einen Stab (32), der von einem mittleren Abschnitt der Basisplatte (34) nach unten ragt und einen Schlotkanal (36), der von der Basisplatte (34) nach oben ragt und ein offenes Inneres besitzt, das durch Seitenwände (37) umgeben wird, um Zugang zu den Durchlaßlöchern (40, 42) zu bieten,
dadurch gekennzeichnet, daß
der Schlotkanal (36) ein Paar von einander gegenüberliegenden aufrechten schmalen Endwänden (35) besitzt, die mit einer Kante der Basis (34) abschließen und ein Paar von einander gegenüberliegenden aufrechten langen Seitenwänden (37), die von einer Kante der Basis (34) beabstandet sind, und
dadurch, daß die Stange (32) beabstandet von der Basis (34) mit einer Scheibe (38) versehen ist, um mit dem Innengewindezügen des Befestigungseinsatzes (16) in Verbindung zu treten.

## Revendications

1. Fixation de montage pour l'alignement et la mise en place d'une pièce rapportée de fixation (16) dans un panneau en nid d'abeille (12), la pièce rapportée de fixation (16) ayant un trou taraudé (26) et un trou d'accès d'époxy (20, 22) de chaque côté du trou taraudé (26), dans une plaque circulaire supérieure et ladite fixation de montage (30) ayant une plaque de base (34) plane circulaire dotée d'une paire de trous traversants (40, 42), une tige (32) descendant depuis une partie centrale de la plaque de base (34) et une cheminée (36) montant depuis la plaque de base (34) avec un intérieur ouvert entouré par des parois latérales (37) permettant l'accès aux trous traversants (40, 42), caractérisée en ce que la cheminée (36) a une paire de parois d'extrémité (35) étroites montantes opposées, alignées avec un bord de la base (34), et une paire de parois latérales allongées (37) montantes écartées d'un bord de la base (34), et
en ce que la tige (32) est pourvue à distance de la base (34), d'un disque (30) pour venir en prise avec les filetages du taraudage de la pièce rapportée de fixation (16).
